# EUROPÄISCHE PATENTANMELDUNG

(11) **EP 1 352 928 A1**
(43) Veröffentlichungstag der Anmeldung: **15.10.2003**
(21) Anmeldenummer: 02008304.4
(22) Anmeldetag: 11.04.2002
(51) Int. Cl.: C09B 67/34, C09B 41/00, C09B 69/06, C09B 44/06

(54) **Verfahren zur Herstellung von Flüssigformulierungen von basischen Azofarbstoffen**

(71) Anmelder: BASF AKTIENGESELLSCHAFT, 67056 Ludwigshafen (DE)
(72) Erfinder: Michael, Schmitt, 67549 Worms (DE); Merger, Roland, 76669 Bad Schonborn (DE); Rainer, Tresch, 67133 Maxdorf, (DE)

(57) **Zusammenfassung**

Verfahren zur Herstellung von Flüssigformulierungen von Farbstoffen der allgemeinen Formel I 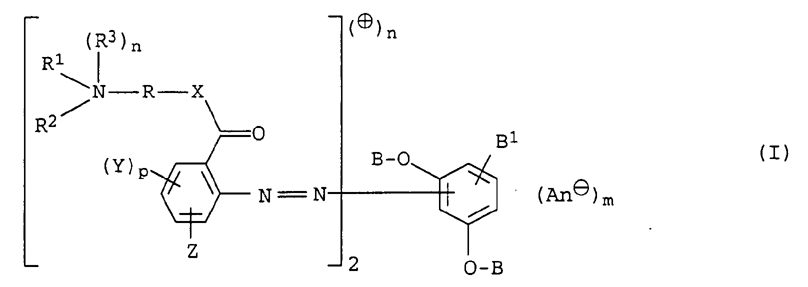 in der
- Y: Chlor oder Brom,
- Z: Wasserstoff, Chlor, Brom, Sulfonsäureester, Nitro oder gegebenenfalls substituiertes Sulfamoyl,
- X: 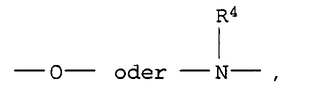
- R: gegebenenfalls durch Sauerstoff, 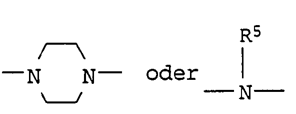 unterbrochenes Alkylen,
- m: die Zahl 1 oder 2,
- n: die Zahl 0 oder 1,
- p: die Zahl 0, 1 oder 2,
- An⊖: das Äquivalent eines Anions,
- R¹ und R²: unabhängig voneinander Wasserstoff, gegebenenfalls substituiertes Alkyl, Alkenyl, Cycloalkyl, Aralkyl oder Aryl oder R¹ und R² zusammen mit dem sie verbindenden Stickstoff einen Heterocyclus,
- R³: Wasserstoff oder gegebenenfalls substituiertes Alkyl,
- B: Wasserstoff oder C₁- bis C₄-Alkyl,
- B¹: Wasserstoff, Hydroxy, C₁- bis C₄-Alkoxy oder C₁- bis C₄-Alkyl bedeuten, wobei
- R⁴: gegebenenfalls für substituiertes Alkyl und
- R⁵: für Wasserstoff oder C₁- bis C₄-Alkyl steht und der Rest 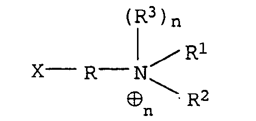 auch einen gegebenenfalls substituierten Piperazinrest bedeuten kann,
durch Diazotierung eines Amins der Formel II 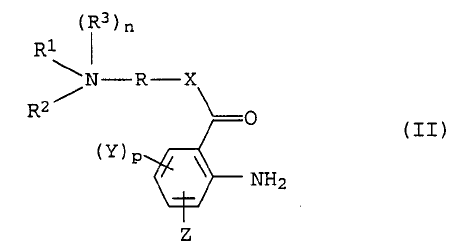 und anschließende Kupplung des Diazoniumsalzes auf eine Verbindung der Formel III 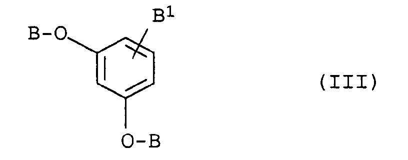 sowie gegebenenfalls der Zugabe von solubilisierenden Zusätzen, indem man für die Diazotierung den pH-Wert mit reiner Methansulfonsäure oder mindestens 20 mol-%igen Mischungen von Methansulfonsäure in einbasigen Säuren sauer einstellt.

## Beschreibung

Die vorliegende Erfindung betrifft ein Verfahren zur Herstellung von Flüssigformulierungen von Farbstoffen der allgemeinen Formel I 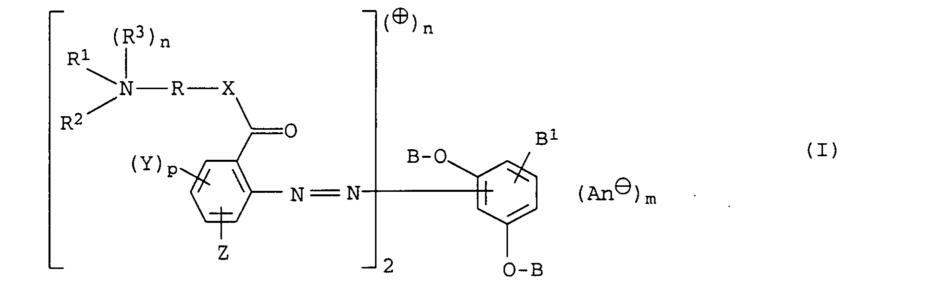 in der
- Y: Chlor oder Brom,
- Z: Wasserstoff, Chlor, Brom, Sulfonsäureester, Nitro oder gegebenenfalls substituiertes Sulfamoyl,
- X: 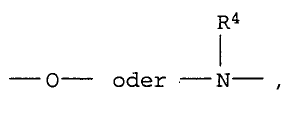
- R: gegebenenfalls durch Sauerstoff, 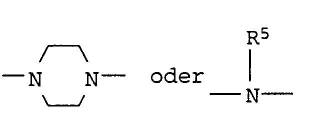 unterbrochenes Alkylen,
- m: die Zahl 1 oder 2,
- n: die Zahl 0 oder 1,
- p: die Zahl 0, 1 oder 2,
- An^{⊖}: das Äquivalent eines Anions,
- R¹ und R²: unabhängig voneinander Wasserstoff, gegebenenfalls substituiertes Alkyl, Alkenyl, Cycloalkyl, Aralkyl oder Aryl oder R¹ und R² zusammen mit dem sie verbindenden Stickstoff einen Heterocyclus,
- R³: Wasserstoff oder gegebenenfalls substituiertes Alkyl,
- B: Wasserstoff oder C₁- bis C₄-Alkyl,
- B¹: Wasserstoff, Hydroxy, C₁- bis C₄-Alkoxy oder C₁- bis C₄-Alkyl bedeuten, wobei
- R⁴: gegebenenfalls für substituiertes Alkyl und
- R⁵: für Wasserstoff oder C₁- bis C₄-Alkyl steht und der Rest 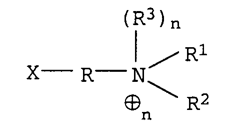 auch einen gegebenenfalls substituierten Piperazinrest bedeuten kann,
durch Diazotierung eines Amins der Formel II 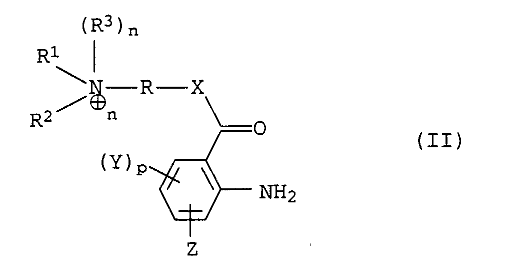 und anschließende Kupplung des Diazoniumsalzes auf eine Verbindung der Formel III 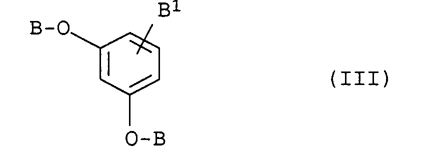 sowie gegebenenfalls der Zugabe von solubilisierenden Zusätzen.

Basische Azofarbstoffe der allgemeinen Formel I sind aus der EP-A-0 162 409 bekannt. Flüssigformulierungen mit beliebigen Gegenionen wie Acetat werden dabei durch Lösen des zwischenisolierten Farbstoffs in der gewünschten Säure wie Essigsäure herstellt. Die Zwischenisolierung ist dabei notwendig, um den Farbstoff von unerwünschter Salzfracht zu befreien. Zwischenisolierungen sind jedoch verfahrenstechnisch aufwändig, erfordern sie doch zusätzliches Auskristallisieren, Absaugen und Waschen des Farbstoffs.

Der vorliegenden Erfindung lag daher ein Verfahren als Aufgabe zugrunde, dass zu stabilen Farbstofflösungen führt, die direkt ohne Zwischenisolierung als Flüssigformulierungen bzw. Grundlage dafür verwendet werden können. Aufwändige Isolierungsschritte des Farbstoffs sollen vermieden werden. Darüberhinaus sollen die Flüssigformulierungen gegenüber legierten Stählen nur gering oder nicht korrosiv sein.

Diese Aufgabe wurde gelöst, indem man für die Diazotierung den pH-Wert mit reiner Methansulfonsäure oder mindestens 20 mol-%igen, bevorzugt ≥ 50 mol-%igen, insbesondere ≥ 80 mol-%igen Mischungen von Methansulfonsäure in einbasigen Säuren sauer einstellt.

Reine Methansulfonsäure bedeutet mit Methansulfonsäure als einzigem Säuerungsmittel. Einbasige Säuren können einbasige Mineralsäuren oder Carbonsäuren sein, wie Salzsäure, Bromwasserstoff, Ameisensäure, Essigsäure, Hydroxyessigsäure, Aminoessigsäure, Methoxyessigsäure, Propionsäure, Milchsäure, Benzoesäure, Benzolsulfonsäure und Toluolsulfonsäure.

Bevorzugt stellt man den pH-Wert für die Diazotierung mit reiner Methansulfonsäure oder mindestens 20 mol-%igen, bevorzugt ≥ 50 mol-%igen, insbesondere ≥ 80 mol-%igen Mischungen von Methansulfonsäure in einbasigen Carbonsäuren sauer ein.

Insbesondere werden Ameisensäure, Essigsäure, Propionsäure und Milchsäure bevorzugt. Bevorzugt stellt man den pH-Wert für die Diazotierung mit einer Mischung von Methansulfonsäure in Ameisensäure ein.

Bevorzugt wird derart angesäuert, dass der pH-Wert bei der Diazotierung pH 0 bis 3, besonders bevorzugt 1,0 bis 2,5, insbesondere pH 2 beträgt.

Bevorzugt säuert man nur mit Methansulfonsäure an. In diesem Fall setzt man die Methansulfonsäure bevorzugt im Molverhältnis 2,5/1 bis 3,5/1 bezogen auf 1 Mol Amin II ein. Ein größerer Methansulfonsäureüberschuß führt zu einer Erhöhung der Salzfracht und ist daher unerwünscht. Besonders bevorzugt werden 2,8 - 3 Mol Methansulfonsäure pro Mol Amin II eingesetzt.

In der Regel wird man das Amin II in der Mischung aus Wasser und Methansulfonsäure lösen. In Flüssigformulierungen oftmals verwendete solubilisierende Zusätze können sofern gewünscht bereits im Reaktionsgemisch vorhanden sein. Solubilisierende Zusätze werden unten genannt und sind mit Wasser mischbare organischen Lösungsmittel sowie Harnstoffe und Lactame. Bevorzugt verwendet man keine solubilisierenden Zusätze. Stattdessen verwendet man bevorzugt Wasser als einziges Lösungsmittel für Diazotierung und Kupplung zum Farbstoff I.

Die Diazotierung erfolgt mit üblichen Diazotierungsmitteln wie salpetrige Säure, die im Sauren aus Alkalinitrat gebildet wird. Weiterhin sind Nitrosylschwefelsäure und der Neopentylglykolester der salpetrigen Säure geeignete Diazotierungsmittel.

Nach Zerstörung des überschüssigen Nitrits beispielsweise mit Amidosulfonsäure wird die Verbindung III, in der Regel als wässrige Lösung, zugesetzt. Diese Kupplung erfolgt bevorzugt im pH-Bereich von 3 bis 6, besonders bevorzugt 4 bis 4,5. Der pH-Wert sollte den Wert von 7 nicht übersteigen, da andernfalls der Farbstoff zu kristallisieren beginnt. Setzt man jedoch die unten genannten solubilisierenden Zusätze zu, so wird die Stabilität bezüglich Auskristallisieren deutlich erhöht.

Man stellt den pH-Wert für die Kupplung mit dem Fachmann bekannten Mitteln ein. Hierfür geeignete Basen sind beispielsweise Natriumacetat, Natronlauge, Natriumcarbonat, Natriumhydrogencarbonat und Amine wie Ethanolamin.

Die Diazotierung erfolgt auf an sich bekannte Weise bei Temperaturen von -5 bis 25°C. Für die Kupplung läßt man das Reaktionsgemisch erwärmen und erwärmt gegebenenfalls zur Vervollständigung der Reaktion auf 30°C.

Das Verfahren ist zur Herstellung von Lösungen des Farbstoffs der allgemeinen Formel I geeignet.

Alle in der obengenannten Formel auftretenden Alkyl- oder Alkylengruppen können sowohl geradkettig als auch verzweigt sein. Wenn in der obengenannten Formel substituierte Alkylgruppen auftreten, so kommen als Substituenten, z.B. Hydroxy und Methoxy in Betracht. Die Alkylgruppen weisen dann in der Regel 1 oder 2 Substituenten auf.

Die Anionen An⊖ sind z.B. Monomethylsulfat, Ethylsulfat, Aminosulfonat, Chlorid, Bromid, Formiat, Acetat, Hydroxyacetat, Aminoacetat, Methoxyacetat, Propionat, Lactat, Benzoat, Benzolsulfonat und Toluolsulfonat.

Reste Z sind neben den bereits genannten C₁-C₄-Sulfonsäureester, deren Alkylrest gegebenenfalls mit Mono- oder Di-(C₁-C₆)-alkylamino oder Morpholino substituiert ist wie SO₂OC₂H₄N(CH₃)₂, SO₂OC₂H₄N(C₂H₅)₂, SO₂OC₂H₄N(C₃H₇)₂, SO₂OC₂H₄N(C₄H₉)₂, SO₂OC₂H₄N(CH₂CH₂)₂O, SO₂OCH(CH₃)CH₂N(CH₃)₂, SO₂OCH(CH₃)CH₂N(C₂H₅)₂, SO₂OC₄H₈N(CH₃)₂ oder SO₂OC₄H₈N(C₂H₅)₂.

Reste Z sind ferner z.B. Sulfamoyl, Phenylsulfamoyl oder Monooder Di-(C₁-C₄)-sulfamoyl, deren Alkylreste gegebenenfalls mit Hydroxy oder Methoxy substituiert sind, wie Methylsulfamoyl, Mono- oder Dimethylsulfamoyl, Mono- oder Diethylsulfamoyl, Mono-oder Dipropylsulfamoyl, Mono- oder Dibutylsulfamoyl, Mono- oder Dihydroxyethylsulfamoyl oder N-Methyl-N-Hydroxyethylsulfamoyl.

Die Alkylenreste R haben z.B. 2 bis 10 C-Atome und sind gegebenenfalls 1- bis 3-fach mit Sauerstoff, -NR₅- oder 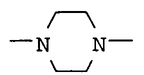 unterbrochen.

Im einzelnen sind beispielsweise zu nennen: C₂H₄, C₃H₆, CH(CH₃)-CH₂, CH₂-CH(CH₃)-, C₄H₈, CH(C₂H₅)-CH₂, C₆H₁₂, CH₂-C(CH₃)₂-CH₂, -C(CH₃)₂-CH₂-C(CH₃)₂-, C₂H₄OC₂H₄, C₃H₆OC₃H₆, C₃H₆OC₂H₄OC₃H₆, C₃H₆OC₄H₈OC₃H₆, C₃H₆OC₂H₄OC₂H₄OC₃H₆, C₂H₄NHC₂H₄, C₂H₄NHC₃H₆, C₃H₆NHC₃H₆, C₃H₆NHC₂H₄NHC₃H₆, C₃H₆NHC₆H₁₂NHC₃H₆,

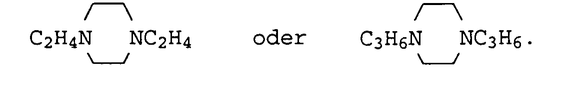

Reste R¹ und R² sind unabhängig voneinander z.B. C₁-C₁₄-Alkyl, das gegebenenfalls mit Hydroxy, C₁-C₈-Alkoxy, N-C₅-C₈-Cycloalkylamino, N,N-Di-(C₁-C₄-alkyl)amino substituiert ist, C₂-C₆-Alkenyl oder C₅-C₈-Cycloalkyl.

Im einzelnen seien beispielsweise neben den bereits aufgeführten folgende Reste R¹ und R² genannt:
Methyl, Ethyl, n-Propyl, i-Propyl, n-Butyl, i-Butyl, n-Amyl, i-Amyl, n-Hexyl, i-Hexyl, Heptyl, Octyl, 2-Ethylhexyl, Decyl, Dodecyl, Tridecyl, Tetradecyl, 2-Hydroxyethyl, 2- oder 3-Hydroxypropyl, Hydroxybutyl, Allyl, Methallyl, Cyclopentyl, Cyclohexyl oder Cyclooctyl, N,N-Dimethylaminoethyl, N,N-Diethylaminoethyl, N,N-Dipropylaminoethyl, N,N-Dibutylaminoethyl, 3-(N,N-Dimethylamino)-propyl, 3-(N,N-Diethylamino)-propyl, 3-(N,N-Dipropylamino)-propyl oder 3-(N,N-Dibutylamino)-propyl, N-Cyclohexylaminoethyl, 3-(N-Cyclohexylamino)-propyl, 3-(N-Cyclooctylamino)-propyl, N-Methyl-N-cyclohexylaminoethyl, 3-(N-Methyl-N-cyclohexylamino)-propyl, Benzyl, Phenethyl, Phenyl oder Tolyl.

R¹ und R² können zusammen mit dem sie verbindenden Stickstoff z.B. die Reste folgender 5- oder 6-gliedriger Heterocyclen bilden, die gegebenenfalls Stickstoff oder Sauerstoff als weiteres Heteroatom aufweisen, und gegebenenfalls substituiert sind, wie Pyrrolidin, Piperidin, Morpholin, Piperazin, das am Stickstoff durch Methyl, Ethyl, n- und i-Propyl, n-, i-, sec.-Butyl, 2-Hydroxyethyl, 2-Aminoethyl, 2- oder 3-Hydroxypropyl, 2- oder 3-Aminopropyl substituiert sein kann, Imidazol, das in 2- und/oder 4-Stellung durch Methyl, Ethyl, Propyl oder Butyl substituiert sein kann oder N-3-(C₁-C₁₂)-Alkyl- oder Vinylimidazol, das in 2- und/oder 4-Stellung noch durch Methyl, Ethyl, Propyl oder Butyl substituiert sein kann.

Reste R³ und R⁴ sind unabhängig voneinander C₁- bis C₁₂-Alkyl, das gegebenenfalls mit Hydroxyl, C₁-C₄-Alkoxy, Chlor oder Phenyl substituiert ist, wie Methyl, Ethyl, n- oder i-Propyl, n- oder i-Butyl, n- oder i-Amyl, n- oder i-Hexyl, Octyl, 2-Ethylhexyl, Decyl, Dodecyl, 2-Hydroxyethyl, 2- oder 3-Hydroxypropyl, Hydroxybutyl, Benzyl, CH₂CH₂(OH)CH₂Cl oder CH₂CH(OH)CH₂OH.

Reste R⁵, B und B¹ sind z.B. Methyl, Ethyl, Propyl, Isopropyl, Butyl, Isobutyl, sec-Butyl und tert.-Butyl. Reste B¹ sind ferner z.B. Methoxy, Ethoxy, Propoxy oder Butoxy.

Der Rest 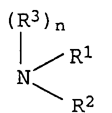 kann auch eine Gruppe der Formel 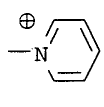 sein.

Bevorzugt wird das Verfahren bei Farbstoffen I, in denen Z Wasserstoff, Chlor oder Brom bedeutet.

Bevorzugte Reste R¹ und R² sind z.B.: Methyl, Ethyl, n-Propyl, i-Propyl, C₂- oder C₃-Hydroxyalkyl oder Cyclohexyl. Bevorzugte durch R¹ und R² zusamen mit dem sie verbindenden Stickstoff gebildete heterocyclische Reste leiten sich von Morpholin, Piperidin, 4-Methylpiperazin, 4-Ethylpiperazin, 4-Hydroxyethylpiperazin, 4-(2'-Aminoethyl)-piperazin, Imidazol, 2-Methylimidazol oder 4-Methylimidazol ab.

Bevorzugt wird das Verfahren für Farbstoffe I, in denen R³ für Wasserstoff C₁- bis C₄-Alkyl, C₂ bis C₄-Hydroxylalkyl oder Benzyl, insbesondere Wasserstoff, Methyl, Ethyl, Hydroxyethyl oder Hydroxypropyl steht.

Ferner ist es bevorzugt für Farbstoffe I, in denen R⁴ Methyl, Ethyl oder Hydroxyethyl. Weiterhin ist es bevorzugt bei Farbstoffen I in den B und B¹ sind unabhängig voneinander Wasserstoff und Methyl bedeuten.

Besonders geeignet ist das Verfahren zur Herstellung von Verbindungen der Formel IV 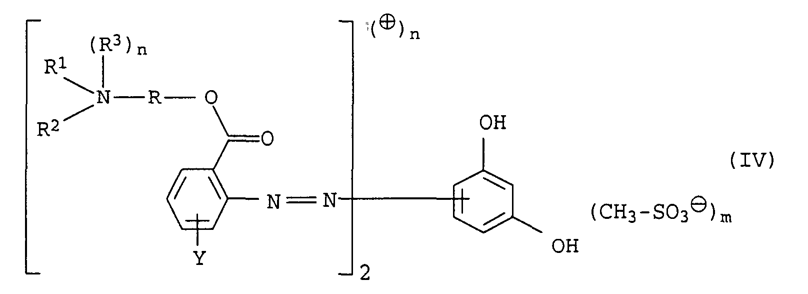 in der R, R¹, R², R³, n, m und y die angegebene Bedeutung haben.

Insbesondere wird es für Farbstoffe IV bevorzugt, in denen Y für Wasserstoff oder Nitro und/oder R für Ethylen, Propylen, iso-Propylen oder Butylen steht.

Ferner wird es für Farbstoffe IV bevorzugt, in denen R¹ und R² für Wasserstoff, Methyl, Ethyl, n- oder iso-Propyl, n-, iso- oder sec-Butyl, Methoxyethyl, Cyclohexyl oder gemeinsam mit dem sie verbindenden Stickstoffatom für Morpholinyl, Piperidinyl, Piperazinyl, N-Methylpiperazinyl, N-Ethylpiperazinyl oder Imidazolyl steht und R³ für Wasserstoff, Methyl, Ethyl oder Hydroxyethyl steht.

Nach dem erfindungsgemäßen Verfahren erhält man Farbstofflösungen, die direkt für Flüssigeinstellungen weiterverwendet werden können. Die Farbstoffe weisen eine hohe Löslichkeit auf, so dass sie stabile Flüssigformulierungen ergeben. Auf diese Weise werden aufwändige Isolierschritte des Farbstoffs wie auch zusätzliche Reinigungsschritte, die mit Abwasser einhergehen vermieden. Ferner sind die erhaltenen Flüssigformulierungen nicht oder nur gering gegenüber legierten Stählen korrosiv.

Sofern erwünscht, werden die Farbstofflösungen mit solubilisierenden Zusätzen versetzt. Solche Zusätze sind beispielsweise mit Wasser mischbare organische Lösungsmittel wie C₁-C₄-Alkanole, z.B. Methanol, Ethanol, Propanol, Isopropanol, Butanol, Isobutanol, sec-Butanol oder tert-Butanol, Carbonsäureamide, wie N,N-Dimethylformamid oder N,N-Dimethylacetamid, Ketone oder Ketoalkohole, wie Aceton, Methylethylketon oder 2-Methyl-2-hydroxypentan-4-on, Ether, wie Tetrahydrofuran oder Dioxan, Mono-, Oligo- oder Polyalkylenglykole oder -thioglykole, die C₂-C₆-Alkyleneinheiten aufweisen, wie Ethylenglykol, 1,2- oder 1,3-Propylenglykol, 1,2-oder 1,4-Butylenglykol, Hexan-1,6-diol, Diethylenglykol, Triethylenglykol, Dipropylenglykol, Thiodiglykol, Polyethylenglykol oder Polypropylenglykol, andere Polyole, wie Glycerin oder Hexan-1,2,6-triol, C₁-C₄-Alkylether von mehrwertigen Alkoholen, wie Ethylenglykolmonomethyl- oder -monoethylether, Diethylenglykolmonomethyl- oder -monoethylether, Diethylenglykolmonobutylether (Butyldiglykol) oder Triethylenglykolmonomethyl- oder -monoethylether, C₁-C₄-Alkylester von mehrwertigen Alkoholen, γ-Butyrolacton oder Dimethylsulfoxid. Geeignete solubilisierende Zusätze sind ferner Lactame, wie ε-Caprolactam, Pyrrolidin-2-on oder N-Methylpyrrolidin-2-on, Harnstoff, cyclische Harnstoffe, wie 1,3-Dimethylimidazolidin-2-on oder 1,3-Dimethylhexahydropyrimid-2-on.

Bevorzugte solubilisierende Zusätze sind Harnstoffe, Caprolactam, Mono-, Di- oder Trialkylenglykole, die C₂-C₄-Alkyleneinheiten aufweisen sowie Oligo- und Polyalkylenglykole mit Ethylen- und/oder Propyleneinheiten sowie deren C₁-C₄-Alkylether und C₁-C₄-Alkylester. Ganz besonders bevorzugt sind Ethylenglykol, 1,2- oder 1,3-Propylenglykol, Butyldiglykol, Harnstoffe und Caprolactam.

Bevorzugte Flüssigeinstellungen enthalten im wesentlichen
- 15 bis 30 Gew.-%: Farbstoffe I (bezogen auf den Farbstoff ohne Gegenion)
- 0 bis 30 Gew.-%: solubilisierende Zusätze
bezogen auf die Gesamtmenge der wässrigen Flüssigeinstellung. Insbesondere werden Flüssigeinstellungen bevorzugt, die keine solubilisierenden Zusätze enthalten. Die Flüssigeinstellungen eignen sich unter anderem zum Färben und Bedrucken cellulosischer Fasermaterialien wie holzhaltige und holzfreie Papiermassen.

Die nachfolgenden Beispiele sollen die Erfindung näher erläutern. Bei den Teilen handelt es sich um Gewichtsteile.

### Beispiel 1:

Herstellung der Diazokomponente: Zu 326 Teilen Isatosäureanhydrid in 1000 Teile Dioxan tropfte man bei 60°C 187 Teile Dimethylaminoethanol zu. Man rührte 1 Stunde nach, zog das Lösungsmittel im Vakuum ab und destillierte anschließend bei 160°C/0.1 Torr 402 Teile Anthranilsäure-2'-dimethylaminoethylester über.

275 Teile Anthranilsäure-2'-dimethylaminoethylester wurden in 190 Teilen Wasser und 230 Teilen Methansulfonsäure gelöst. Nach Abkühlen auf 5°C wurden 150 Teile einer wässrigen, 40 gew.-%igen Natriumnitritlösung tropfenweise zugesetzt. Nach 3 Stunden wurde überschüssiges Nitrit durch Zugabe von Amidosulfonsäure zerstört. Man gab dann eine Lösung von 44 Teilen Resorcin in 160 Teilen Wasser gelöst zu und rührte nach Abstumpfen mit Natriumacetat auf pH 5 ca. 12 h bei Raumtemperatur. Es entstand eine homogene Lösung. Der gelöste Farbstoff entspricht der Formel:

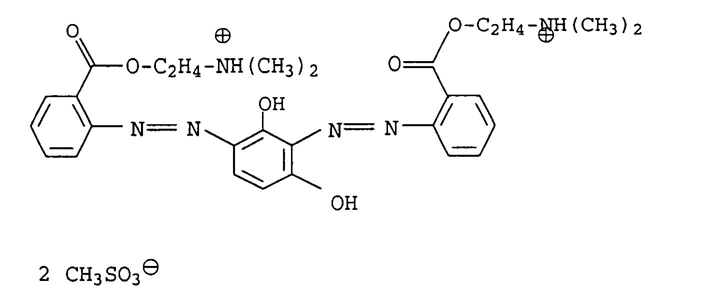

Analog dem beschriebenen Verfahren lassen sich flüssige Zubereitungen weiterer Farbstoffe herstellen, die im Farbton und Affinität weitgehend dem Beispiel 1 entsprechen.

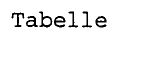

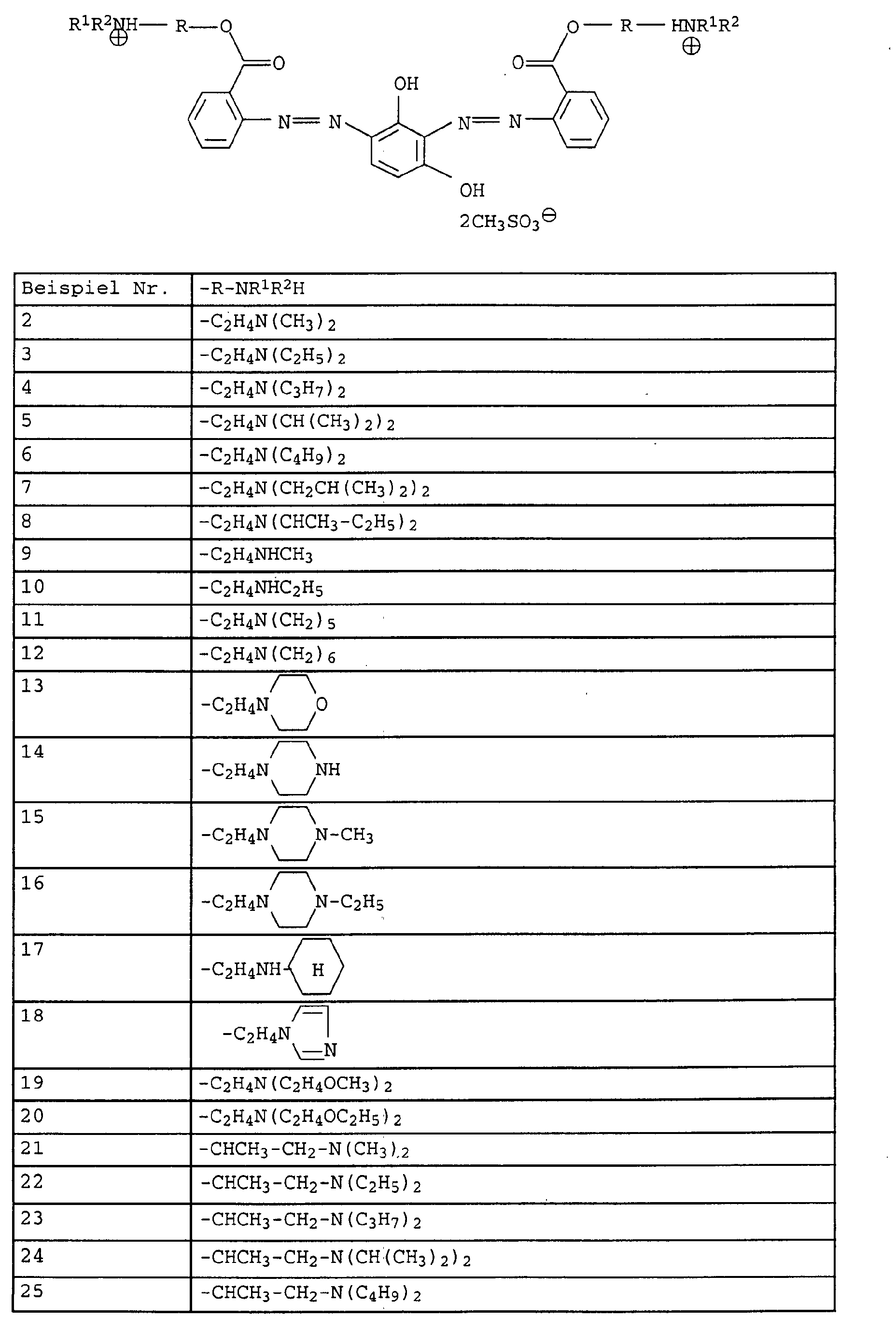

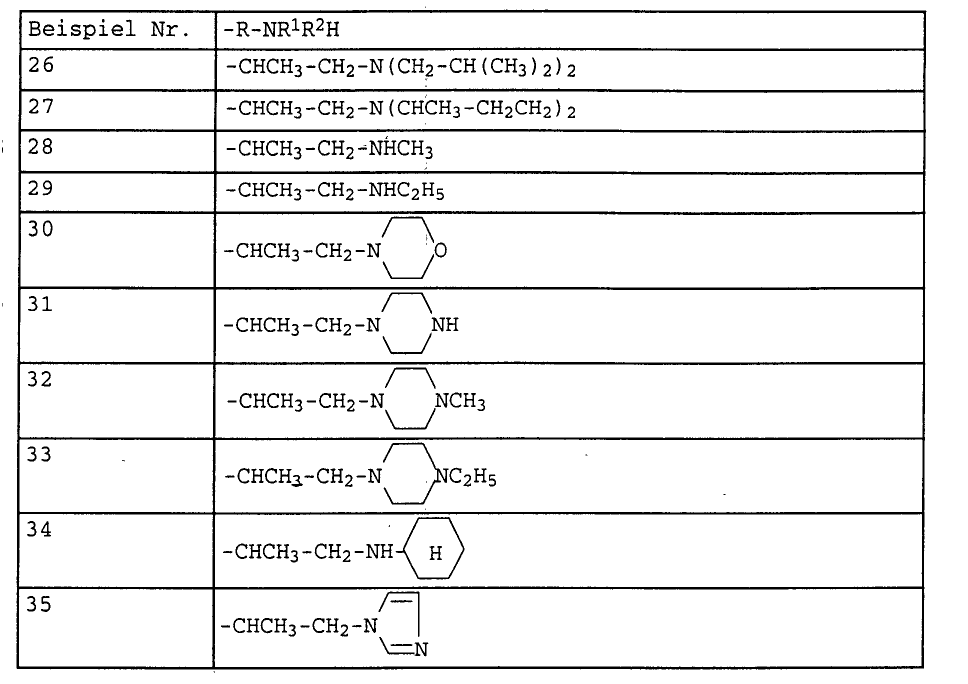

### Beispiel 36

104 Teile Anthranilsäure-2'-dimethylaminoethylester wurden in 160 Teilen Ameisensäure 85 gew.-%ig und 85 Teilen Methansulfonsäure 70 gew.-% kalt gelöst. Nach Abkühlen auf 0°C wurden 82 Teile einer wässrigen, 42 gew.-%igen Natriumnitritlösung tropfenweise zugesetzt. Nach 3 Stunden wurde überschüssiges Nitrit durch Zugabe von Amidosulfonsäure zerstört. Man gab 29 Teile Resorcin zu und rührte nach Abstumpfen mit Triethanolamin auf pH 3-3.5 ca. 12 h bei Raumtemperatur. Es entstand eine homogene Lösung.

## Patentansprüche

1. Verfahren zur Herstellung von Flüssigformulierungen von Farbstoffen der allgemeinen Formel I 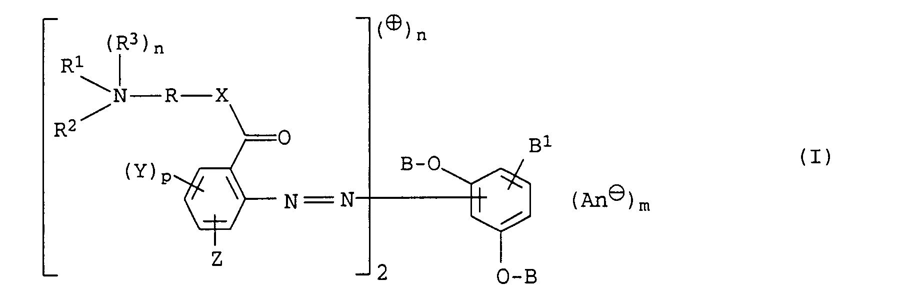 in der
Y Chlor oder Brom,
Z Wasserstoff, Chlor, Brom, Sulfonsäureester, Nitro oder gegebenenfalls substituiertes Sulfamoyl,
X 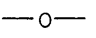 oder 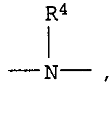
R gegebenenfalls durch Sauerstoff, 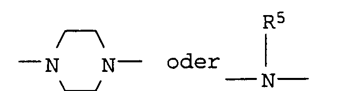 unterbrochenes Alkylen,
m die Zahl 1 oder 2,
n die Zahl 0 oder 1,
p die Zahl 0, 1 oder 2,
An⊖ das Äquivalent eines Anions,
R¹ und R² unabhängig voneinander Wasserstoff, gegebenenfalls substituiertes Alkyl, Alkenyl, Cycloalkyl, Aralkyl oder Aryl oder R¹ und R² zusammen mit dem sie verbindenden Stickstoff einen Heterocyclus,
R³ Wasserstoff oder gegebenenfalls substituiertes Alkyl,
B Wasserstoff oder C₁- bis C₄-Alkyl,
B¹ Wasserstoff, Hydroxy, C₁- bis C₄-Alkoxy oder C₁- bis C₄-Alkyl bedeuten, wobei
R⁴ für gegebenenfalls substituiertes Alkyl und
R⁵ für Wasserstoff oder C₁- bis C₄-Alkyl steht und der Rest 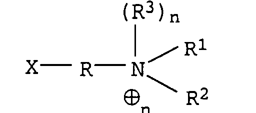 auch einen gegebenenfalls substituierten Piperazinrest bedeuten kann,
durch Diazotierung eines Amins der Formel II 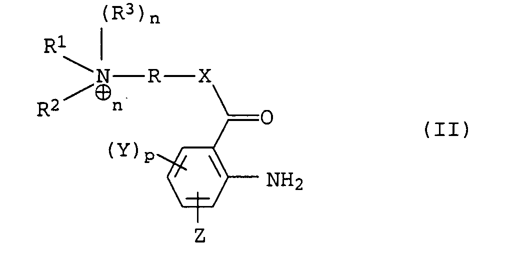 und anschließende Kupplung des Diazoniumsalzes auf eine Verbindung der Formel III 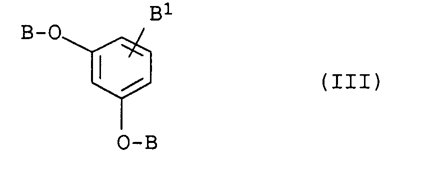 sowie gegebenenfalls der Zugabe von solubilisierenden Zusätzen
**dadurch gekennzeichnet, dass** man für die Diazotierung den pH-Wert mit reiner Methansulfonsäure oder mindestens 20 mol-%igen Mischungen von Methansulfonsäure in einbasigen Säuren sauer einstellt.

2. Verfahren nach Anspruch 1, **dadurch gekennzeichnet, dass** man den pH-Wert für die Diazotierung mit Methansulfonsäure oder mindestens 20 mol-%igen Mischungen von Methansulfonsäure in einbasigen Carbonsäuren sauer einstellt.

3. Verfahren nach Anspruch 1 oder 2, **dadurch gekennzeichnet, dass** man mit Methansulfonsäure derart ansäuert, dass der pH-Wert bei der Diazotierung pH 0 bis 3 beträgt.

4. Verfahren nach einem der Ansprüche 1 bis 3, **dadurch gekennzeichnet, dass** man den pH-Wert für die Diazotierung mit einer Mischung von Methansulfonsäure in Ameisensäure einstellt.

5. Verfahren nach einem der Ansprüche 1 bis 3, **dadurch gekennzeichnet, dass** man Methansulfonsäure als einziges Säuerungsmittel in der Diazotierung einsetzt.

6. Verfahren nach Anspruch 5, **dadurch gekennzeichnet, dass** man die Methansulfonsäure im Molverhältnis 2,5/1 bis 3,5/1 bezogen auf das Amin II einsetzt.

7. Verfahren nach einem der Ansprüche 1 bis 6, **dadurch gekennzeichnet, dass** man bei pH 3 bis 6 kuppelt.

8. Verfahren nach einem der Ansprüche 1 bis 7, **dadurch gekennzeichnet, dass** man Wasser als einziges Lösungsmittel für Diazotierung und Kupplung zum Farbstoff I verwendet.
